# EUROPEAN PATENT SPECIFICATION

(11) **EP 2 896 493 B1**
(45) Date of publication and mention of the grant of the patent: **14.09.2016**
(21) Application number: 14194435.5
(22) Date of filing: 24.11.2014
(51) Int. Cl.: B29C 45/76

(54) **Injection molding machine**
Spritzgießmaschine
Machine de moulage à injection

(30) Priority: 17.01.2014 JP 2014006964
(43) Date of publication of application: 22.07.2015
(73) Proprietor: SUMITOMO HEAVY INDUSTRIES, LTD., Tokyo 141-6025 (JP)
(72) Inventor: Mizuno, Hiroyuki, Kanagawa, 237-8555 (JP)
(74) Representative: Walcher, Armin

(56) References cited:
- EP-A1- 2 647 482
- US-A1- 2005 194 925
- US-A1- 2009 174 350
- US-A1- 2009 200 975
- US-A1- 2012 242 260

## Description

### BACKGROUND OF THE INVENTION

### Field of the Invention

The present invention relates to an injection molding machine.

### Description of Related Art

Injection molding machines fill a cavity space within a mold unit with a liquid molding material and solidifies the filled molding material, thereby molding a molding product (for example, refer to Japanese Unexamined Patent Application Publication No. 2011-183705). Theinjection molding machineshave a three-phase AC motor that drives a movable part. The three-phase AC motor includes, for example, a three-phase synchronous motor.

European Patent Application EP 2 647 482 A1 discloses an injection molding machine with a power distributor configured to control a three-phase AC motor that drives a movable part. US Patent Application US 2005/194925 A1 describes that different two-phase modulations are used for an AC motor depending on the determined torque and/or number of rotations of the motor.

US Patent Application US 2012/242260 A1 discloses a method of determining a stationary phase in a two-phase modulation. US Patent Application US 2009/174350 A1 discloses application of a voltage of a rectangular waveform and switching between direct application of a voltage and a PWM control using pulse width modulation means.

US Patent Application US 2009/200975 A1 relates to a motor drive apparatus for an electric power steering system. The motor is driven in a two-phase modulation mode under rapid steering conditions and in a three-phase sine-wave modulation mode under normal steering conditions.

A control unit controls the three-phase AC motor, using a voltage command value for three-phase modulation. A rotor of the three-phase AC motor follows a rotating magnetic field formed by analternating current. Since the rotor does not substantially rotate when a movable part of which the speed is approximately zero, such as during mold clamping, the voltage command value for three-phase modulation is substantially fixed. Therefore, an electric current may continue being concentrated on one phase out of the three phases, and generated heat in a phase in which an electric current continues being concentrated is large.

### SUMMARY OF THE INVENTION

The invention has been made in view of the above problems, and an object thereof is to provide an injection molding machine that can reduce heat generation of a control unit of a three-phase AC motor.

In order to solve the above problems, there is provided an injection molding machine including a three-phase AC motor configured to drive a movable part; and a control unit configured to control the three-phase AC motor. The control unit controls the three-phase AC motor, using a voltage command value of two-phase modulation, when predetermined conditions are satisfied, and the predetermined conditions include at least that the speed of the movable part is equal to or less than a predetermined value.

According to an aspect of the invention, there is provided an injection molding machine that can reduce heat generation of a control unit of a three-phase AC motor.

### DETAILED DESCRIPTION OF THE INVENTION

FIG. 1 is a view illustrating an injection molding machine according to an embodiment of the invention.
FIG. 2 is a waveform chart illustrating a voltage command value for three-phase modulation and a carrier wave according to the embodiment of the invention.
FIG. 3 is a waveform chart after the voltage command value for three-phase modulation of FIG. 2 has been converted to a voltage command value of two-phase modulation.

### DETAILED DESCRIPTION OF THE INVENTION

Although embodiments for carrying out the invention will be described below with reference to the drawings, the same or corresponding components will be designated by the same or corresponding reference numerals and the description thereof will be omitted.

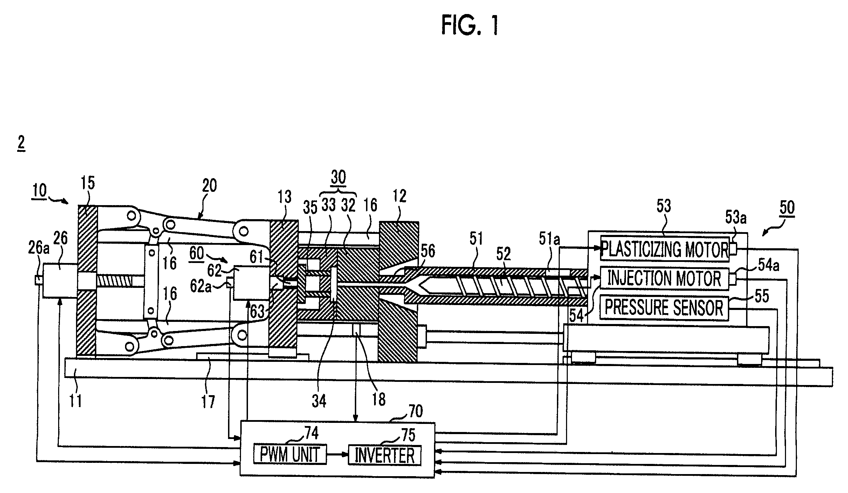

FIG. 1 is a view illustrating an injection molding machine according to an embodiment of the invention. An inj ectionmolding machine 2, for example, as illustrated in FIG. 1, has a mold clamping unit 10, an injection unit 50, an ejector unit 60, and a control unit 70. The mold clamping unit 10 performs a mold closing process, a mold clamping process, and a mold opening process. The mold closing process is a process of closing a mold unit 30, the mold clamping process is a process of clamping the mold unit 30, and the mold opening process is a process of opening the mold unit 30. The injection unit 50 performs a fillingprocess, a hold pressure process, and a plasticizing process. The filling process is a process of filling a liquid molding material into a cavity space 34 within the mold unit 30, the hold pressure process is a process of applying pressure to the molding material within the cavity space 34, and the plasticizing process is a process of plasticizing the molding material for the following shot. The ejector unit 60 performs an ejection process. The ejection process is a process of ejecting a molding product from the mold unit 30 after mold opening.

The injection molding machine 2 automatically and repeatedly manufactures molding products, for example, by automatically and repeatedly performing the mold closingprocess, the mold clamping process, the filling process, the hold pressure process, the plasticizing process, a cooling process, the mold opening process, and the ejection process. The cooling process is a process of solidifying the molding material within the cavity space 34. The plasticizing process may be performed during the cooling process for shortening of a molding cycle.

Next, the mold clamping unit 10 will be described. In the description of the mold clamping unit 10, a description will be made with reference to a forward movement direction (right direction in FIG. 1) of a movable platen 13 during mold closing and a rearward movement direction (left direction in FIG. 1) of the movable platen 13 during mold opening.

The mold clamping unit 10, for example, as illustrated in FIG. 1, has a frame 11, a stationary platen 12, a movable platen 13, a rear platen 15, tie-bars 16, a toggle mechanism 20, and a mold clamping motor 26.

The stationary platen 12 is fixed to the frame 11. A stationary mold 32 is attached to the surface of the stationary platen 12 that opposes the movable platen 13.

The movable platen 13 is made movable along a guide (for example, a guide rail) 17 laid on the frame 11, and is made advanceable and retreatable with respect to the stationary platen 12. A movable mold 33 is attached to the surface of the movable platen 13 that opposes the stationary platen 12.

Mold closing, mold clamping, and mold opening are performed by advancing and retreating the movable platen 13 with respect to the stationary platen 12. The mold unit 30 is constituted of the stationary mold 32 and the movable mold 33.

The rear platen 15 is coupled to the stationary platen 12 via a plurality of (for example, four) tie-bars 16, and is placed on the frame 11 so as to be movable in a mold opening/closing direction. In addition, the rear platen 15 may be made movable along with a guide laid on the frame 11. The guide of the rear platen 15 is common to a guide 17 of the movable platen 13.

In addition, in the present embodiment, the stationary platen 12 is fixed to the frame 11 and the rear platen 15 is made movable in the mold opening/closing direction with respect to the frame 11. However, the rear platen 15 may be fixed to the frame 11 and the stationary platen 12 may be made movable in the mold opening/closing direction to the frame 11.

The tie-bars 16 are made parallel to the mold opening/closing direction, and are extended in response to a clamping force. At least one tie-bar 16 is provided with a strain sensor 18. As the strain sensor 18 detects the strain of the tie-bars 16, the strain sensor detects the actual value of the clamping force, and outputs a signal indicating the actual value to the control unit 70. The control unit 70 performs a feedback control so that the deviation between the actual value of the clamping force and a set value reaches zero.

In addition, a clamping force sensor that detects the clamping force is not limited to the strain sensor 18. For example, a load cell may be used as the clamping force sensor.

The toggle mechanism 20 is disposed between the movable platen 13 and the rear platen 15 and is attached to the movable platen 13 and the rear platen 15, respectively. As the toggle mechanism 20 is extended and retracted in the mold opening/closing direction, the movable platen 13 advances and retreats with respect to the rear platen 15.

The mold clamping motor 26 is, for example, a three-phase AC motor, and drives the toggle mechanism 20 to thereby drive the movable platen 13 as a movable part. A ball screw mechanism as a motion converter that converts a rotational motion of the mold clamping motor 26 into a linear motion and transmits the linear motion to the toggle mechanism 20 is provided between the mold clamping motor 26 and the toggle mechanism 20.

The mold clamping motor 26 has an encoder 26a. The encoder 26a detects the actual value of the rotational angle of an output shaft of the mold clamping motor 26, and outputs a signal indicating the actual value to the control unit 70. The control unit 70 performs a feedback control so that the deviation between the actual value of the rotational angle and a set value reaches zero.

Next, the operation of the mold clamping unit 10 will be described. The operation of the mold clamping unit 10 is controlled by the control unit 70. The control unit 70 has a storage unit, such as a memory and a CPU, and makes the CPU execute a control program stored in a storage unit, thereby controlling the operation of the mold clamping unit 10.

In the mold closing process, the mold clamping motor 26 is driven to actuate the toggle mechanism 20 to advance the movable platen 13. The movable mold 33 approaches the stationary mold 32.

In the mold clamping process, the mold clamping motor 26 is driven in a state where the movable mold 33 and the stationary mold 32 are brought into contact with each other, and a clamping force obtained by multiplying a propulsive force generated by the mold clamping motor 26 by toggle multiplication is generated. A cavity space 34 is formed between the stationary mold 32 and the movable mold 3 3 in a mold clamped state. The filling process, the hold pressure process, the cooling process, and the plasticizing process may be performed during the mold clamping process.

In the mold opening process, the mold clamping motor 26 is driven to actuate the toggle mechanism 20 to retreat the movable platen 13. Thereafter, the ejection process may be performed.

In addition, in the present embodiment, the clamping force obtained by multiplying the propulsive force generated by the mold clamping motor 26 by the toggle multiplication is generated. However, the toggle mechanism 20 may not be provided, or the propulsive force generated by the mold clamping motor 26 may be transmitted to the movable platen 13 as it is without being amplified.

The control unit 70 has a PWMunit 74 that compares a voltage command value with a carrier wave, thereby generating a PWM (pulse width modulation) signal, and an inverter 75 that converts the electric power of an AC power source into power according to the PWM signal from the PWM unit 74. The inverter 75 performs switching according to the PWM signal from the PWM unit 74 and controls the three-phase AC motor.

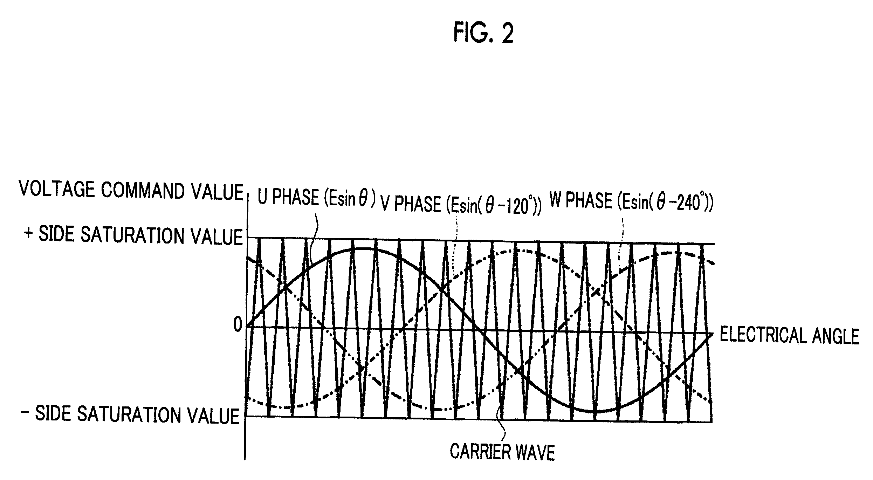

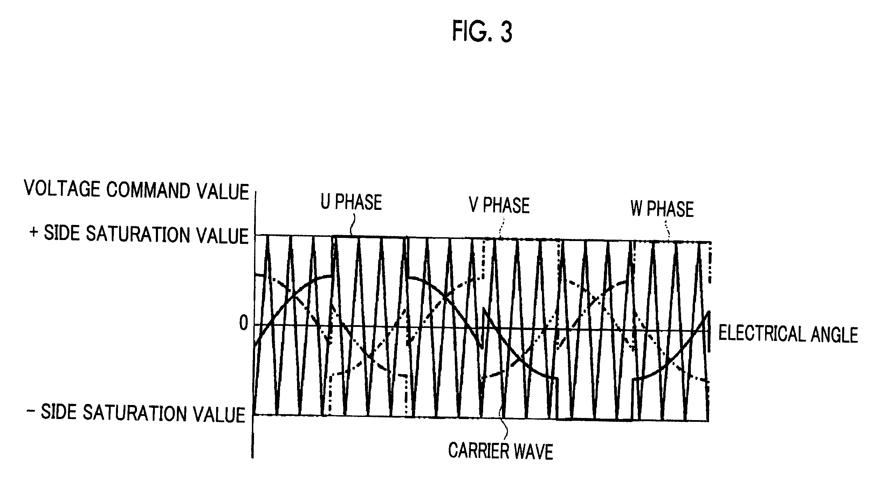

FIG. 2 is a waveform chart illustrating a voltage command value for three-phase modulation and a carrier wave according to the embodiment of the invention. FIG. 3 is a waveform chart after the voltage command value for three-phase modulation of FIG. 2 to a voltage command value of two-phase modulation. In FIGS. 2 and 3, a solid line shows a U-phase voltage command value, a dashed line shows a V-phase voltage command value, a two-dot chain line shows a W-phase voltage command value, and a dotted line shows a carrier wave.

The voltage command value for three-phase modulation illustrated in FIG. 2 is a sinusoidal wave with amplitude E. When based on a U phase, the U-phase voltage command value is Esin (θ), the V-phase voltage command value is Esin (θ-120°), and the W-phase voltage command value is Esin (θ-240°). θ is an electrical angle. The carrier wave to be compared with the voltage command value is, for example, a triangular wave.

The voltage command value for two-phase modulation illustrated in FIG. 3 is obtained by fixing a voltage command value of any one phase for three-phase modulation illustrated in FIG. 2 to a saturation value, and adding a value ΔV obtained by subtracting the original voltage command value before being fixed to the saturation value from the saturation value to a voltage command value of each remaining phase for three-phase modulation. A + side saturation value is a maximum value of the carrier wave, and a - side saturation value is a minimum value of the carrier wave. In addition, a voltage command value of any one phase for two-phase modulation may be fixed to a greater value than the + side saturation value, or may be fixed to a value smaller than the - side saturation value. Additionally, a value obtained by subtracting a voltage command value of a stationary phase for three-phase modulation from a greater value (or a smaller value than the - side saturation value) than the + side saturation value may be used instead of the above ΔV.

In FIG. 3, the V-phase voltage command value is fixed to the - side saturation value in 0° ≤ θ < 60°, the U-phase voltage command value is fixed to the + side saturation value in 60° ≤ θ < 120°, the W-phase voltage command value is fixed to the - side saturation value in 120° ≤ θ < 180°, the V-phase voltage command value is fixed to the + side saturation value in 180° ≤ θ < 240°, the U-phase voltage command value is fixed to the - side saturation value in 240° ≤ θ < 300°, and the W-phase voltage command value is fixed to the + side saturation value in 300° ≤ θ < 360°. A value obtained by adding a value ΔV, which is obtained by subtracting a voltage command value for three-phase modulation of a phase fixed to a saturation value from each of these saturation values, to a voltage command value for three-phase modulation of each remaining phase, becomes a voltage command value of each remaining phase for two-phase modulation.

In addition, the voltage command value for two-phase modulation is not limited to the waveform illustrated in FIG. 3. For example, the voltage command value may be fixed to the + side saturation value or the - side saturation value. Additionally, the voltage command value of any one phase may be fixed only in some sections of 0° to 360°. Additionally, the phase in which the voltage command value is fixed may not be changed at every 60°, for example, and may be changed at every 120°.

When predetermined conditions for the mold clamping motor 26 are satisfied, the control unit 70 controls the mold clamping motor 26, using the voltage command value for two-phase modulation. The predetermined conditions for the mold clamping motor 26 include (1) that the speed of the movable platen 13 is equal to or less than a predetermined value. The speed of the movable platen 13 can be detected using, for example, the encoder 26a of the mold clamping motor 26, an exclusive speed sensor, or the like. The "speed" is expressed by magnitude (absolute value) and does not include a direction. The "speed" maybe an advancing speed or may be a retreating speed.

Since a rotor of the mold clamping motor 26 does not substantially rotate when the movable platen 13 of which the speed is approximately zero, the voltage command value is substantially fixed. Therefore, an electric current may continue being concentrated on one phase out of the three phases.

According to the present embodiment, (1) when the speed of the movable platen 13 is equal to or less than a predetermined value, it is possible to use the voltage command value for two-phase modulation. A voltage command value of a phase in which an electric current continues being concentrated can be fixed to a saturation value, and switching of the phase in which an electric current continues being concentrated can be stopped. Generally, as an electric current value is larger or the number of times of switching is larger, switching loss is increased. According to the present embodiment, since the switching of the phase in which an electric current continues being concentrated can be stopped, the switching loss can be markedly reduced. As a result, the generation of heat by the switching loss can be markedly reduced, and the decrease of lifespan by the heat can be suppressed.

When the predetermined conditions for the mold clamping motor 26 are not satisfied, the control unit 70 may control the mold clamping motor 26, using the voltage command value for three-phase modulation. The voltage command value for three-phase modulation and the voltage command value for two-phase modulation are properly used according to whether or not the predetermined conditions for the mold clamping motor 26 are satisfied. Since the voltage command value for three-phase modulation changes more smoothly than the voltage command value for two-phase modulation, the advance and retreat of the movable platen 13 is smooth.

The predetermined conditions for the mold clamping motor 26 may also include (2) that the torque of the mold clamping motor 2 6 is equal to or more than a predetermined value, in addition to the above condition (1). The "torque" is expressed by magnitude (absolute value) and does not include a direction. The above condition (1) and the above condition (2) are AND conditions. The torque of the mold clamping motor 26 can be detected using, for example, a clamping force sensor, such as an electric current sensor of the mold clamping motor 26 or the strain sensor 18.
(2) When the torque of the mold clamping motor 26 is equal to or more than a predetermined value, the electric current value of the mold clamping motor 26 is large. The "electric current value" is expressed by magnitude (absolute value) and does not include a direction. Since the electric current value is large, it is significant to stop the switching of the phase in which an electric current continues being concentrated.
   Additionally, the predetermined conditions for the mold clamping motor 26 may also include (3) when the mold clamping process is being performed, in addition to the above condition (1). The above condition (1) and the above condition (3) are AND conditions. Whether or not the mold clamping process is being performed can be detected by, for example, a mold touched sensor or the like. The mold touched sensor detects the contact (mold touch) between the movable mold 33 and the stationary mold 32. The mold clamping process may be performed while the mold touch is detected, and the mold clamping process may not be performed while the mold touch is not detected.
(3) When the mold clamping process is being performed, the torque of the mold clamping motor 26 is larger than that when the mold closing process is being performed or when the mold opening process is being performed and the electric current value of the mold clamping motor 26 is larger than that when the mold closing process is being performed or when the mold opening process is being performed. Since the electric current value is large, it is significant to stop the switching of the phase in which an electric current continues being concentrated.

Additionally, (3) when the mold clamping process is being performed, the speed of the movable platen 13 is approximately zero unlike when the mold closing process is being performed or when the molding opening process is being performed. The rotor of the mold clamping motor 26 does not substantially rotate, and the voltage command value is substantially fixed. When the voltage command value is substantially fixed, the voltage command value for two-phase modulation can be reliably used.

The predetermined conditions for the mold clamping motor 26 may be various. For example, the predetermined conditions for the mold clamping motor 26 may also include all the above conditions (1) to (3). In this case, the above conditions (1) to (3) becomes an AND condition. Additionally, the predetermined conditions for the mold clamping motor 26 may also include only the above condition (3). Since the speed of the movable platen 13 reaches approximately zero (3) when the injection molding machine 2 is in the mold clamping process, the above condition (1) is naturally satisfied. The predetermined conditions for the mold clamping motor 26 may also include (4) that the elapsed time from mold clamping start or mold closing completion is equal to or more than a predetermined time, in addition to the above condition (3). The above condition (3) and the above condition (4) are AND conditions. Additionally, the predetermined conditions for the mold clamping motor 26 include (5) that a gap between the movable mold 33 and the stationary mold 32 is equal to or less than a predetermined value during the mold closing process, instead of the above condition (3). The above condition (3) and the above condition (5) are OR conditions . The gap between the movable mold 33 and the stationary mold 32 can be detected using a gap sensor or the like.

The control unit 70 may have a learning function. For example, the control unit 70 stores detection values of various sensors mounted on the inj ectionmoldingmachine 2 when the voltage command value for two-phase modulation is used, and determines whether the situation of the current injection molding machine 2 is the same as a situation when the voltage command value for two-phase modulation was used in the past, on the basis of the detection values of the various sensors. The control unit 70 may control the mold clamping motor 26, using the voltage command value for two-phase modulation, when it is determined that the situation of the current injection molding machine 2 is the same as the situation when the voltage command value for two-phase modulation was used in the past. On the other hand, the control unit 70 may control the mold clamping motor 26, using the voltage command value for three-phase modulation, when it is determined that the situation of the current injection molding machine 2 is not the same as the situation when the voltage command value for two-phase modulation was used in the past. The control of the three-phase AC motor other than mold clamping motor 26 is the same.

Next, the injection unit 50 will be described again with reference to FIG. 1. In the description of the injection unit 50, unlike in the description of the mold clamping unit 10, a description will be with reference to a forward movement direction (left direction in FIG. 1) of the screw 52 during filling and a rearward movement direction (right direction of FIG. 1) of the screw 52 during plasticizing.

The injection unit 50 has a cylinder 51, a screw 52, a plasticizing motor 53, an injection motor 54, and a pressure sensor 55.

The cylinder 51 heats a molding material supplied from a supply port 51a. The supply port 51a is formed at a rear portion of the cylinder 51. Aheatingsource, such as a heater, is provided at an outer periphery of the cylinder 51. A nozzle 56 is provided at a front end of the cylinder 51.

The screw 52 is disposed within the cylinder 51 so as to be rotatable and advanceable/retreatable.

The plasticizing motor 53 is, for example, a three-phase AC motor, and rotates the screw 52 as a movable part. The plasticizing motor 53 may have an encoder 53a. The encoder 53a detects the actual value of the number of rotations of an output shaft of the plasticizing motor 53, and outputs a signal indicating the actual value to the control unit 70. In the plasticizing process, the control unit 70 may perform a feedback control so that the deviation between the actual value of the number of rotations and a set value reaches zero.

The injection motor 54 is, for example, a three-phase AC motor, and advances and retreats the screw 52 as the movable part. A motion converter that converts a rotational motion of the injection motor 54 into a linear motion of the screw 52 is provided between the screw 52 and the injection motor 54. The injection motor 54 may have an encoder 54a. The encoder 54a detects the actual value of the number of rotations of the output shaft of the injection motor 54, thereby detecting an actual value of the advance speed of the screw 52, and outputs a signal illustrating the actual value to the control unit 70. In the fillingprocess, the control unit 70 may perform a feedback control so that the deviation between the actual value of the advance speed of the screw 52 and a set value reaches zero.

The pressure sensor 55 detects an actual value of the back pressure (the pressure of resin pushed by the screw 52) of the screw 52, and outputs a signal indicating the actual value to the control unit 70. In the hold pressure process, the control unit 70 may perform a feedback control so that the deviation between the actual value of the back pressure of the screw 52 and the set value reaches zero.

In the filling process, the injection motor 54 is driven to advance the screw 52 and make the cavity space 34 of the mold unit 30 filled with the liquid molding material accumulated ahead of the screw 52. The set value of the advance speed of the screw 52 may be constant, or may be changed according to a screw position or an elapsed time. If the screw 52 advances to a predetermined position (so-called V/P changeover position), the hold pressure process is started. In addition, if the elapsed time from the filling process start reaches a predetermined time, the hold pressure process may be started.

In the hold pressure process, the injection motor 54 is driven to push the screw 52 forward and apply pressure to the molding material within the cavity space 34. A molding material equivalent to volumetric shrinkage caused by cooling of the molding material can be replenished. The set value of the back pressure of the screw 52 may be constant, or may be gradually changed according to the elapsed time or the like. The cooling process is started after an inlet (so-called gate) of the cavity space 34 is sealed and a back flow of the molding material from the cavity space 34 is prevented. The plasticizing process may be performed during the cooling process.

In the plasticizing process, the plasticizing motor 53 is driven to rotate the screw 52 and feed the molding material forward along a spiral groove formed in the screw 52. The molding material is gradually melted with this feeding. The screw 52 is retreated as the liquid molding material is fed to the front of the screw 52 and accumulated in a front portion of the cylinder 51. The set value of the number of rotations of the screw 52 maybe constant, or may be changed according to the screw position or the elapsed time.

In the plasticizing process, the injection motor 54 is driven to apply a predetermined back pressure to the screw 52 in order to limit a sudden retreat of the screw 52. The plasticizing process is completed if the screw 52 retreats to a predetermined position and a predetermined amount of the molding material is accumulated ahead of the screw 52.

When predetermined conditions for the injection motor 54 are satisfied, the control unit 70 controls the injection motor 54, using the voltage command value for two-phase modulation. The predetermined conditions for the injection motor 54 include (1A) that the speed of the screw 52 is equal to or less than a predetermined value. The speed of the screw 52 can be detected using, for example, the encoder 54a of the injection motor 54, an exclusive speed sensor, or the like.

Since a rotor of the injection motor 54 does not substantially rotate when the screw 52 of which the speed is approximately zero is driven, the voltage command value is substantially fixed. Therefore, an electric current may continue being concentrated on one phase out of the three phases.

According to the present embodiment, (1A) when the speed of the screw 52 is equal to or less than a predetermined value, it is possible to use the voltage command value for two-phase modulation. A voltage command value of a phase in which an electric current continues being concentrated can be fixed to a saturation value, and switching of the phase in which an electric current continues being concentrated can be stopped. Hence, the switching loss can be markedly reduced, the generation of heat can be markedly reduced, and the decrease of lifespan by the heat can be suppressed.

When the predetermined conditions for the injection motor 54 are not satisfied, the control unit 70 may control the injection motor 54, using the voltage command value for three-phase modulation. The voltage command value for three-phase modulation and the voltage command value for two-phase modulation may be properly used according to whether or not the predetermined conditions for the injection motor 54 are satisfied. Since the voltage command value for three-phase modulation changes more smoothly than the voltage command value for two-phase modulation, the advance and retreat of the screw 52 is smooth.

The predetermined conditions for the injection motor 54 may also include (2A) that the torque of the injection motor 54 is equal to or more than a predetermined value, in addition to the above condition (1A). The above condition (1A) and the above condition (2A) are AND conditions. The torque of the injection motor 54 can be detected using, for example, an electric current sensor of the injection motor 54, the pressure sensor 55, or the like.

(2A) When the torque of the injection motor 54 is equal to or more than a predetermined value, the electric current value of the injection motor 54 is large. Since the electric current value is large, it is significant to stop the switching of the phase in which an electric current continues being concentrated.

Additionally, the predetermined conditions for the injection motor 54 may also include (3A) when the hold pressure process is being performed, in addition to the above condition (1A). The above condition (1A) and the above condition (3A) are AND conditions. Whether or not the hold pressure process is being performed can be detected by, for example, a timer or the like. The timer is provided in the control unit 70 to meter an elapsed time from the start of the hold pressure process.

Additionally, (3A) when the hold pressure process is being performed, the speed of the screw 52 is approximately zero unlike when the filling process is being performed. The rotor of the injection motor 54 does not substantially rotate, and the voltage command value is substantially fixed. When the voltage command value is substantially fixed, the voltage command value for two-phase modulation can be reliably used.

The predetermined conditions for the injection motor 54 may be various similar to the predetermined conditions for the mold clamping motor 26.

In addition, although the injection unit of the present embodiment is of an in-line screw type, the injection unit may be of a preplasticizing type. The preplasticizing type injection unit supplies a molding material melted within a plasticizing cylinder to an injection cylinder, and injects the molding material into the mold unit from the injection cylinder. The screw is disposed inside the plasticizing cylinder so as to be rotatable or rotatable and advanceable/retreatable, and a plunger is disposed within the injection cylinder so as to be advanceable/retreatable. A three-phase AC motor that advances and retreats the plunger is used in the filling process and the hold pressure process, and a three-phase AC motor that rotates the screw is used in the plasticizing process.

Next, the ejector unit 60 will be described. In the description of the ejector unit 60, similar to the description of the mold clamping unit 10, a description will be made with reference to the forward movement direction (right direction in FIG. 1) of the movable platen 13 during mold closing and the rearward movement direction (left direction in FIG. 1) of the movable platen 13 during mold opening.

The ejector unit 60, for example as illustrated in FIG. 1, has an ejector rod 61 and an ejector motor 62.

The ejector rod 61 is inserted through a through-hole of the movable platen 13, and is made advanceable and retreatable with respect to the movable platen 13. With the advance and retreat of the ejector rod 61, an ejection member 35 disposed within the movable mold 33 is advanced and retreated and the ejection member 35 ejects a molding product from the movable mold 33.

The ejector motor 62 is, for example, a three-phase AC motor, and drives the ejector rod 61 as a movable part. A motion converter 63 that converts a rotational motion of the ejector motor 62 into a linear motion of the ejector rod 61 is provided between the ejector motor 62 and the ejector rod 61. The motion converter 63 is constituted of, for example, a ball screw mechanism or the like.

The ejector motor 62 may have an encoder 62a. The encoder 62a detects an actual value of the rotational angle of an output shaft of the ejector motor 62, and outputs a signal indicating the actual value to the control unit 70. The control unit 70 may perform a feedback control so that the deviation between the actual value of the rotational angle and a set value reaches zero.

In the ejection process, the ejector motor 62 is driven to eject the ejector rod 61 forward from the movable platen 13. The ejection member 35 ejects a molding product from the movable mold 33. Thereafter, the ejector motor 62 is driven to retreat the ejector rod 61 to its original position.

When predetermined conditions for the ejector motor 62 are satisfied, the control unit 70 controls the ejector motor 62, using the voltage command value for two-phase modulation. The predetermined conditions for the ejector motor 62 include (1B) that the speed of the ejector rod 61 is equal to or less than a predetermined value. The speed of the ejector rod 61 can be detected using, for example, the encoder 62a of the ejector motor 62, an exclusive speed sensor, or the like.

Since a rotor of the ejector motor 62 does not substantially rotate when the ejector rod 61 of which the speed is approximately zero is driven, the voltage command value is substantially fixed. Therefore, an electric current may continue being concentrated on one phase out of the three phases.

A case where the speed of the ejector rod 61 reaches approximately zero includes a case in which the adhesion force between the movable mold 33 and a molding product is strong and the movable mold 33 and the molding product are not separated from each other. In this case, in order to advance the ejector rod 61 against the adhesion force between the movable mold 33 and the molding product, a high current is supplied to the ejector motor 62.

According to the present embodiment, (1B) when the speed of the ejector rod 61 is equal to or less than a predetermined value, it is possible to use the voltage command value for two-phase modulation. A voltage command value of a phase in which an electric current continues being concentrated can be fixed to a saturation value, and switching of the phase in which an electric current continues being concentrated can be stopped. Hence, the switching loss can be markedly reduced, the generation of heat can be markedly reduced, and the decrease of lifespan by the heat can be suppressed.

When the predetermined conditions for the ejector motor 62 are not satisfied, the control unit 70 may control the ejector motor 62, using the voltage command value for three-phase modulation. The voltage command value for three-phase modulation and the voltage command value for two-phase modulation are properly used according to whether or not the predetermined conditions for the ejector motor 62 are satisfied. Since the voltage command value for three-phase modulation changes more smoothly than the voltage command value for two-phase modulation, the advance and retreat of the ejector rod 61 is smooth.

The predetermined conditions for the ejector motor 62 may also include (2B) that the torque of the ejector motor 62 is equal to or more than a predetermined value, in addition to the above condition (1B). The above condition (1B) and the above condition (2B) are AND conditions. The torque of the ejector motor 62 can be detected using, for example, an electric current sensor of the ejector motor 62, or the like.

(2B) When the torque of the ejector motor 62 is equal to or more than a predetermined value, the electric current value of the ejector motor 62 is large. Since the electric current value is large, it is significant to stop the switching of the phase in which an electric current continues being concentrated.

The predetermined conditions for the ejector motor 62 may also include (3B) that the ejector rod 61 is being advancing from an ejection start position toward an ejection completion position, in addition to the above condition (1B). The above condition (1B) and the above condition (3B) are AND conditions. When a high current is supplied to the ejector motor 62, the voltage command value for two-phase modulation can be reliably used.

The predetermined conditions for the ejector motor 62 may be various similar to the predetermined conditions for the mold clamping motor 26.

In addition, although the ejector unit 60 of the present embodiment is of an electric-powered type, the ejector unit may be of a hybrid type, or may have a hydraulic cylinder in addition to the ejector motor 62. Additionally, the ejector unit 60 may have a toggle mechanism that amplifies the propulsive force generated by the ejector motor 62, and the configuration of the ejector unit 60 is not particularly limited.

Although the preferable embodiments of the injection molding machine have been described above in detail, the invention is not limited to the above-described embodiments, and various alterations and improvements can be made within the scope of the invention described in the claims.

For example, the above injection molding machine may be of a horizontal type in which the mold opening/closing direction is horizontal, the injection molding machine may be of a vertical type in which the mold opening/closing direction is vertical. In the case of the vertical type, the mold clamping unit has an upper platen as the movable platen, a lower platen as the stationary platen, and a support platen. The upper platen and the support platen are coupled together via the tie-bars, and the lower platen is disposed between the upper platen and the support platen. The lower platen and the support platen are coupled together via the toggle mechanism. The support platen and the upper platen are moved up and down with respect to the lower platen by driving the mold clamping motor to extend and retract the toggle mechanism up and down. The upper platen is moved down during mold closing, and the upper platen is moved up during mold opening. When the upper platen is stopped at a mold opening completion position, since the toggle mechanism is in a folded state, the toggle multiplication is small, and a high current is supplied to the mold clamping motor in a state where the rotor of the mold clamping motor is substantially stopped. Thus, in the case of the vertical type, the predetermined conditions for the mold clamping motors may also include that the position of the upper platen is the mold opening completion position. The condition that the position of the upper platen is the mold opening completion position and the condition that the mold clamping process is being performed may be OR conditions.

Additionally, when predetermined conditions for an injection unit movement motor are satisfied, the control unit 70 controls the injection unit movement motor, using the voltage command value for two-phase modulation. The injection unit movement motor is a three-phase AC motor, and is used for a nozzle contact process in which the nozzle 56 as the movable part is pressed against the mold unit 30. A motion converter that converts a rotational motion of the injection unit movement motor into a linear motion of the nozzle 56 may be provided between the injection unit movement motor and the nozzle 56. The predetermined conditions for the injection unit movement motors include that the speed of the nozzle 56 is equal to or less than a predetermined value. The predetermined conditions for the injection unit movement motor may be various similar to the predetermined conditions for the mold clamping motor 26.

Additionally, when predetermined conditions for a compression motor are satisfied, the control unit 70 controls the compression motor, using the voltage command value for two-phase modulation. The compression motor is a three-phase AC motor, and is used for a compression process in which the molding material within the cavity space 34 is compressed by moving a compression core as a movable part disposed within the mold unit 30. A motion converter that converts a rotational motion of the compression motor into a linear motion of the compression core may be provided between the compression motor and the compression core. The predetermined conditions for the compression motor include that the speed of the compression core is equal to or less than a predetermined value. The predetermined conditions for the compression motor may be various similar to the predetermined conditions for the mold clamping motor 26.

## Claims

1. An injection molding machine (2) comprising:
a three-phase AC motor (26, 53, 54, 62) configured to drive a movable part (13, 52, 61); and
a control unit (70) configured to control the three-phase AC motor,
wherein the control unit controls the three-phase AC motor, using a voltage command value of two-phase modulation, when predetermined conditions are satisfied,
**characterized in that**
the predetermined conditions include at least that the speed of the movable part is equal to or less than a predetermined value, and
that the control unit controls the three-phase AC motor, using a voltage command value of three-phase modulation when the predetermined conditions are not satisfied.

2. The injection molding machine according to Claim 1,
wherein the predetermined conditions further include that a torque of the three-phase AC motor is equal to or more than a predetermined value.

3. The injection molding machine according to Claim 1 or 2,
wherein the three-phase AC motor is a mold clamping motor (26) used in a mold closing process, a mold clamping process, and a mold opening process.

4. The injection molding machine according to Claim 3,
wherein the predetermined conditions further include that the mold clamping process is being performed.

5. The injection molding machine according to Claim 3,
wherein the injection molding machine is a vertical type, and
wherein the predetermined conditions further include that the mold clamping process is being performed or that the position of the movable part is a mold opening completion position.

6. The injection molding machine according to Claim 1 or 2,
wherein the three-phase AC motor is an injection motor (54) used in a filling process and a hold pressure process.

7. The injection molding machine according to Claim 6,
wherein the predetermined conditions further include that the hold pressure process is being performed.

8. The injection molding machine according to Claim 1 or 2,
wherein the three-phase AC motor is an ejector motor (62) used in an ejection process of ejecting a molding product from a mold unit.

9. The injection molding machine according to Claim 1 or 2,
wherein the three-phase AC motor is a compression motor used in a compression process in which a molding material of a cavity space within the mold unit is compressed.

10. The injection molding machine according to Claim 1 or 2,
wherein the three-phase AC motor is an injection unit movement motor used in a nozzle contact process of pressing a nozzle, which injects a molding material into a mold unit, against the mold unit.

## Patentansprüche

1. Spritzgießmaschine (2), umfassend:
einen Dreiphasen-Wechselstrommotor (26, 53, 54, 62), der so ausgelegt ist, dass er ein bewegliches Bauteil (13, 52, 61) antreibt, und
eine Steuereinheit (70), die so ausgelegt ist, dass sie den Dreiphasen-Wechselstrommotor steuert,
wobei die Steuereinheit den Dreiphasen-Wechselstrommotor unter Verwendung eines Spannungssignals mit zweiphasiger Modulation steuert, wenn vorbestimmte Bedingungen erfüllt sind,
**dadurch gekennzeichnet, dass**
die vorbestimmten Bedingungen wenigstens umfassen, dass die Geschwindigkeit des beweglichen Teils gleich einem oder kleiner als ein vorbestimmten Wert ist und
dass die die Steuereinheit den Dreiphasen-Wechselstrommotor unter Verwendung eines Spannungssignals mit einer dreiphasigen Modulation steuert, wenn die vorbestimmten Bedingungen nicht erfüllt sind.

2. Die Spritzgießmaschine nach Anspruch 1, worin die vorbestimmten Bedingungen weiter umfassen, dass ein Drehmoment des Dreiphasen-Wechselstrommotors gleich einem oder größer als ein vorbestimmter Wert ist.

3. Die Spritzgießmaschine nach Anspruch 1 oder 2, worin der Dreiphasen-Wechselstrommotor ein Form-Zuhaltemotor (26) ist, der in einem Formschließvorgang, einem Formzuhaltevorgang und einem Formöffnungsvorgang verwendet wird.

4. Die Spritzgießmaschine nach Anspruch 3, worin die vorbestimmten Bedingungen weiter umfassen, dass der Formzuhaltevorgang ausgeführt wird.

5. Die Spritzgießmaschine nach Anspruch 3, worin die Spritzgießmaschine von einem vertikalen Typ ist und worin die vorbestimmten Bedingungen weiter umfassen, dass der Formzuhaltevorgang ausgeführt wird oder dass die Position des beweglichen Teils eine Position bei abgeschlossener Formöffnung ist

6. Die Spritzgießmaschine nach Anspruch 1 oder 2, worin der Dreiphasen-Wechselstrommotor ein Einspritzmotor (54) ist, der in einem Füllvorgang und einem Nachdruckvorgang verwendet wird.

7. Die Spritzgießmaschine nach Anspruch 6, worin die vorbestimmten Bedingungen weiter umfassen, dass der Nachdruckvorgang ausgeführt wird.

8. Die Spritzgießmaschine nach Anspruch 1 oder 2, worin der Dreiphasen-Wechselstrommotor ein Auswerfermotor (62) ist, der bei einem Auswerfvorgang zum Auswerfen eines Spritzgießerzeugnisses aus einer Formeinheit verwendet wird.

9. Die Spritzgießmaschine nach Anspruch 1 oder 2, worin der Dreiphasen-Wechselstrommotor ein Kompressionsmotor ist, der bei einem Kompressionsvorgang verwendet wird, bei welchem eine Gießmasse eines Formhohlraumes in der Formeinheit komprimiert wird.

10. Die Spritzgießmaschine nach Anspruch 1 oder 2, worin der Dreiphasen-Wechselstrommotor ein Motor zum Bewegen einer Einspritzeinheit ist, der bei einem Düsenkontaktvorgang verwendet wird, bei welchem eine Düse, die eine Gießmasse in eine Formeinheit einspritzt, an die Formeinheit gedrückt wird.

## Revendications

1. Machine de moulage par injection (2) comprenant :
un moteur à courant alternatif triphasé conçu pour entraîner une pièce mobile (13, 52, 61) ; et
une unité de commande (70) conçue pour commander le moteur à courant alternatif triphasé,
dans laquelle l'unité de commande commande le moteur à courant alternatif triphasé, en utilisant une valeur de commande de tension de modulation biphasée, lorsque des conditions prédéterminées sont satisfaites,
**caractérisée en ce que**
les conditions prédéterminées comprennent au moins le fait que la vitesse de la pièce mobile soit égale ou inférieure à une valeur prédéterminée, et
que l'unité de commande commande le moteur à courant alternatif triphasé en utilisant une valeur de commande de tension de modulation triphasée lorsque les conditions prédéterminées ne sont pas satisfaites.

2. Machine de moulage par injection selon la revendication 1,
dans laquelle les conditions prédéterminées comprennent en outre le fait que le couple du moteur à courant alternatif triphasé soit égal ou supérieur à une valeur prédéterminée.

3. Machine de moulage par injection selon la revendication 1 ou 2, dans laquelle le moteur à courant alternatif triphasé est un moteur de serrage de moule (26) utilisé lors d'une opération de fermeture de moule, d'une opération de serrage de moule et d'une opération d'ouverture de moule.

4. Machine de moulage par injection selon la revendication 3,
dans laquelle les conditions prédéterminées comprennent en outre le fait que l'opération de serrage de moule soit en cours d'exécution.

5. Machine de moulage par injection selon la revendication 3,
dans laquelle la machine de moulage par injection est d'un type vertical, et dans laquelle les conditions prédéterminées comprennent en outre le fait que l'opération de serrage du moule soit en cours d'exécution ou que la position de la pièce mobile soit une position de fin d'ouverture du moule.

6. Machine de moulage par injection selon la revendication 1 ou 2,
dans laquelle le moteur à courant alternatif triphasé est un moteur d'injection (54) utilisé lors d'une opération de remplissage et d'une opération de maintien de la pression.

7. Machine de moulage par injection selon la revendication 6,
dans laquelle les conditions prédéterminées comprennent en outre le fait que l'opération de maintien de la pression soit en cours d'exécution.

8. Machine de moulage par injection selon la revendication 1 ou 2,
dans laquelle le moteur à courant alternatif triphasé est un moteur d'éjection (62) utilisé lors d'une opération d'éjection qui consiste à éjecter un produit de moulage d'une unité formant moule.

9. Machine de moulage par injection selon la revendication 1 ou 2,
dans laquelle le moteur à courant alternatif triphasé est un moteur de compression utilisé lors d'une opération de compression dans laquelle un matériau de moulage d'un espace formant cavité dans l'unité formant moule est comprimé.

10. Machine de moulage par injection selon la revendication 1 ou 2,
dans laquelle le moteur à courant alternatif triphasé est un moteur de déplacement d'unité d'injection utilisé lors d'une opération de contact de buse consistant à appuyer une buse qui injecte un matériau de moulage dans une unité formant moule, contre l'unité formant moule.
